# EUROPÄISCHE PATENTSCHRIFT

(11) **EP 3 795 759 B1**
(45) Veröffentlichungstag und Bekanntmachung des Hinweises auf die Patenterteilung: **28.08.2024**
(21) Anmeldenummer: 20197316.1
(22) Anmeldetag: 21.09.2020
(51) Int. Cl.: E03B 9/08, F16L 41/12, F16L 41/00

(54) **SCHUTZROHRSYSTEM**
PROTECTIVE TUBE SYSTEM
SYSTÈME DE TUBES DE PROTECTION

(30) Priorität: 23.09.2019 DE 102019125563
(43) Veröffentlichungstag der Anmeldung: 24.03.2021
(73) Patentinhaber: Schütz, Lothar, 87737 Boos (DE)
(72) Erfinder: Schütz, Lothar, 87737 Boos (DE)
(74) Vertreter: Patentanwälte Olbricht, Buchhold, Keulertz Partnerschaft mbB

(56) Entgegenhaltungen:
- DE-A1- 102008 010 066
- DE-A1- 102009 017 313
- DE-U1- 20 320 265
- DE-U1- 202004 016 472

## Beschreibung

Die Erfindung betrifft ein Schutzrohrsystem, welches aus einem Rohrabschnitt mit einem in Einbaulage oberen und unteren Rohrende und wenigstens einer Elektro- und Fluidleitungskomponente besteht, welche an einer unterirdisch verlaufenden Fluidleitung anschließbar ist. Das untere Ende des Rohrabschnitts ist flüssigkeitsdicht mit der Elektro- und Fluidleitungskomponente verbunden.

Aus dem Stand der Technik bekannte gattungsgemäße Vorrichtungen ermöglichen das Koppeln von unterirdisch verlegten Fluidleitungen mit Bedien- und/oder Messkomponenten. Die Bedien- und/oder Messkomponenten werden hierbei dazu genutzt, den Fluidstrom in der Fluidleitung zu erfassen oder zu verändern. Bei der Erfassung des Fluidstroms können beispielsweise einzelne Parameter des Fluidstroms, wie dessen Temperatur, Geschwindigkeit oder ähnliches erfasst werden. Die Veränderung des Fluidstrom bezieht sich auf dessen Steuerung mittels beispielsweise eines Ventils.

Die Bedien- und/oder Messkomponenten sind in deren montiertem Zustand in der Nähe der Fluidleitung angeordnet und damit in einem unterirdischen Bereich, welcher Umwelteinflüssen wie insbesondere Feuchtigkeit bzw. Grundwasser ausgesetzt sein kann. Die Bedien- und/oder Messkomponenten und die mit ihnen gekoppelten Fluidleitungen verbringen nach deren Montage im Untergrund häufig längere Zeiträume von mehreren Jahren oder Jahrzehnten in dem Untergrund, in welchem sie verbaut sind und sind dabei dauerhaft den oben genannten Umwelteinflüssen ausgesetzt.

DE 20 2004 016 472 U1 betrifft beispielsweise ein Schutzrohrsystem bzw. eine Einbaugarnitur, die bestimmt ist zur Bedienung von Ventilen oder Schiebern unterirdisch angeordneter Gas- oder Wasserleitungen.

DE 10 2009 017 313 A1 betrifft in diesem Zusammenhang eine Glockenbefestigung für solche Einbaugarnituren und ein Verfahren zur Montage dieser Glockenbefestigung.

DE 10 2008 010 066 A1 betrifft ebenfalls eine Einbaugarnitur bzw. ein Schutzrohrsystem für im Straßenbau verlaufende Leitungen mit einer Schlüsselstange, welche von einem Hülsrohr umgeben ist und eine Kuppelmuffe aufweist.

DE 203 20 265 U1 offenbart ein Hülsrohr für unterirdisch verlegte Wasser- oder Gassabsperrorgane, Schieber, Armaturen o. dgl. Dabei ist ein zweiteiliges Schutzrohr vorgesehen.

Problematisch an den aus dem Stand der Technik bekannten Vorrichtungen ist, dass die Bedien- und/oder Messkomponenten über längere Zeiträume Umwelteinflüssen ausgesetzt sind, welche die Funktionsweise der Bedien- und/oder Messkomponenten beeinträchtigen können. So kommt es vor, dass ein Absperrventil einer Fluidleitung erst Jahre nach dessen Montage benutzt werden soll und es aufgrund der Umwelteinflüsse zwischenzeitlich zu einem Einrosten des Absperrventils gekommen ist. Das Absperrventil kann durch das Einrosten so festgestellt sein, dass ein Absperren der Fluidleitung mittels des Absperrventils gänzlich unmöglich ist.

Vor diesem Hintergrund ist es Aufgabe der Erfindung ein verbessertes Schutzrohrsystem bereitzustellen, das die dauerhafte Funktion von unterirdisch verbauten Komponenten sicherstellt, welche mit ebenfalls unterirdisch verbauten Fluidleitungen gekoppelt sind.

Diese Aufgabe wird erfindungsgemäß durch ein Schutzrohrsystem mit den Merkmalen des Anspruchs 1 gelöst, vorteilhafte Ausgestaltungen sind Gegenstand der Unteransprüche 2 bis 9.

Anspruch 1 sieht ein Schutzrohrsystem vor, welches einen Rohrabschnitt mit einen in Einbaulage oberen und unteren Rohrende und wenigstens eine Elektro- und Fluidleitungskomponente umfasst, welche an einer unterirdisch verlaufenden Fluidleitung anschließbar ist, wobei das untere Ende des Rohrabschnitts flüssigkeitsdicht mit der Elektro- und Fluidleitungskomponente verbunden ist, wobei die Elektro- und Fluidleitungskomponente einen mit dem unteren Ende des Rohrabschnitts zusammenwirkenden Abdichtrand aufweist, wobei das obere Rohrende des Rohrabschnitts einen teleskopierbaren Kopfrohrabschnitt aufnimmt. Erfindungsgemäß ist vorgesehen, dass der Kopfrohrabschnitt an seinem oberen Ende eine das Schutzrohrsystem verschließende Straßenkappe aufnimmt, und dass der Rohrabschnitt und/oder der Kopfrohrabschnitt ein Aufnahmegehäuse für elektrische und/oder elektronische Schaltungsteile aufweist, die mit der Elektrokomponente in Wirkverbindung stehen.

Das Schutzrohrsystem muss dabei die Fluidleitung selbst selbstverständlich nicht umfassen, ist jedoch an diese anschließbar. In Einbaulage verläuft der Rohrabschnitt üblicherweise vertikal von der unterirdischen Fluidleitung zur Oberfläche, denkbar sind natürlich auch davon abweichende Einbaulagen des Schutzrohrsystems. Die flüssigkeitsdichte Verbindung der Elektro- und Fluidleitungskomponente mit dem unteren Ende des Rohrabschnitts kann mittelbar oder unmittelbar sein und beispielsweise über einen Anschlussabschnitt erfolgen, der Teil der Elektro- und Fluidleitungskomponente sein kann bzw. sowohl mit der Elektro- und/oder Fluidleitungskomponente als auch mit dem unteren Ende des Rohrabschnitts verbunden sein kann.

Vorteilhafterweise liegt die an die Fluidleitung angeschlossene Elektro- und Fluidleitungskomponente bzw. liegen wesentliche Teile der Elektro- und Fluidleitungskomponente dauerhaft im Trockenen und sind so nicht mehr in dem Ausmaß Umwelteinflüssen ausgesetzt, wie dies gemäß dem Stand der Technik der Fall ist. Die so verbauten Komponenten können nun erfindungsgemäß dauerhaft und sicher betrieben werden. Es ist möglich, Komponenten im Schutzrohrsystem vorzusehen, welche gegenüber Umwelteinflüssen besonders empfindlich sind und die gemäß dem Stand der Technik nicht dazu geeignet waren, im Bereich zwischen einer unterirdisch verbauten Fluidleitung und der Oberfläche verbaut zu werden. Erfindungsgemäß ist vorgesehen, sowohl wenigstens eine Elektrokomponente als auch eine Fluidleitungskomponente wie beispielsweise ein Absperrventil innerhalb des Schutzrohrsystems bereitzustellen. Auf diese Weise wird eine kombinierte Nutzung des Schutzrohrsystems für unterschiedliche Anwendungen ermöglicht.

Insbesondere kann vorgesehen sein, dass wenigstens eine Elektrokomponente und eine oder mehrere Fluidleitungskomponenten einen gemeinsamen Abdichtrand mit dem unteren Ende des Rohrabschnitts aufweisen. Der Abdichtrand kann dabei radial wirken, also beispielsweise als Konus ausgebildet sein oder axial wirken und dabei als ebener Flanschrand ausgebildet sein. Selbstverständlich ist auch eine kombinierte Ausführung denkbar, bei der ein axial wirkender ebener Flanschrand mit einem radial wirkenden konischen Abschnitt kombiniert ausgeführt ist.

In einer weiteren bevorzugten Ausführung der Erfindung ist vorgesehen, dass die Elektro- und/oder Fluidleitungskomponente einen Fußrohrabschnitt aufweist, der mit dem Rohrabschnitt dicht zusammenwirkt. Der Fußrohrabschnitt kann dabei als Abschnitt ausgebildet sein, welcher mit dem Rohrabschnitt über eine Flanschverbindung gekoppelt ist.

In einer weiteren bevorzugten Ausführung der Erfindung ist vorgesehen, dass das obere Rohrende des Rohrabschnitts einen Planumdeckel aufnimmt. Der Planumdeckel kann dabei einen temporären fluiddichten Verschluss des Schutzrohrsystems bilden. Dieser temporäre Verschluss kann während der Montage des Schutzrohrsystems erforderlich sein, wenn die Abdeckung der Fluidleitung beispielsweise mit einem Straßenbelag noch nicht vollständig erfolgt ist und zu einem späteren Zeitpunkt noch erfolgen soll. Der Planumdeckel kann in diesem Zustand das Eindringen von Feuchtigkeit in das Innere des Schutzrohrsystems verhindern und zu einem späteren Zeitpunkt gegen einen dauerhaften Verschluss ausgewechselt werden. Der Planumdeckel kann an einem Abschnitt des Rohrendes angeordnet sein, der dazu ausgebildet ist, alternativ mit anderen Komponenten des Schutzrohrsystems gekoppelt zu werden.

Das obere Rohrende kann demnach dazu ausgebildet sein, alternativ den Kopfrohrabschnitt oder den Planumdeckel aufzunehmen. Mittels des erfindungsgemäß teleskopierbaren Kopfrohrabschnittes kann die Gesamthöhe des Schutzrohrsystems an die Tiefe angepasst werden, in der die Fluidleitung im fertigmontierten Zustand des Schutzrohrsystems verbaut ist.

In einer besonders bevorzugen Ausführung der Erfindung kann dabei vorgesehen sein, dass zwischen dem Kopfrohrabschnitt und der Straßenkappe in radialer Richtung eine Dichtung vorgesehen ist. Die Dichtung kann dabei zwischen dem Kopfrohrabschnitt, in radialer Richtung zur Straßenkappe vorgesehen sein. Mittels dieser Dichtung und der flüssigkeitsdichten Verbindung des unteren Endes des Rohrabschnitts mit der Elektro- und/oder Fluidleitungskomponente kann ein insgesamt flüssigkeitsdichter Innenraum des Schutzrohrsystems bereitgestellt werden, der sowohl von unten gegen Bodenfeuchtigkeit bzw. Grundwasser, als auch von oben, gegen Oberflächenwasser abgedichtete ist.

Das Aufnahmegehäuse kann dabei einen Schutz für die darin vorgesehenen Schaltungsteile bieten. Ferner erleichtert das Aufnahmegehäuse den Zugriff auf die Schaltungsteile, sollten diese beispielsweise nachträglich bearbeitet oder repariert werden müssen.

In einer besonders bevorzugten Ausführung der Erfindung ist vorgesehen, dass das Aufnahmegehäuse auf der Innen- oder Außenseite des Rohrabschnitts oder des Kopfrohrabschnitts angeordnet ist und mit dem Inneren des Rohrabschnitts und/oder des Kopfrohrabschnitts in Verbindung steht. Denkbar ist auch eine Ausführung, bei der zwei oder mehr Aufnahmegehäuse vorgesehen sind, von denen eines innerhalb und eines außerhalb des Rohrabschnitts bzw. des Kopfrohrabschnitts vorgesehen ist.

In einer weiteren bevorzugten Ausführung der Erfindung ist vorgesehen, dass die Fluidleitungskomponente eine Absperrarmatur, ein Ventil, ein Steigrohr, und/oder ein Sattelstück umfasst. Die Fluidleitungskomponente oder Teile davon können dabei so ausgebildet sein, dass sie durch das obere Rohrende des Schutzrohrsystems montierbar bzw. auswechselbar sind. Das Auswechseln kann hier ohne das Durchführen von Erdarbeiten zum Freilegen der Fluidleitungskomponente und damit vereinfacht durchgeführt werden. Hierzu kann die Fluidleitungskomponente über das obere Rohrende an die Fluidleitung anschließbar bzw. abtrennbar sein. Mögliche Anschlusskomponenten zum Anschließen der Fluidleitungskomponente wie beispielsweise Schrauben oder Muttern müsse daher über das obere Rohrende erreichbar sein.

In einer weiteren bevorzugten Ausführung der Erfindung ist vorgesehen, dass die Fluidleitungskomponente eine die Fluidleitung umgreifende Schelle und/oder ein Hausanschlussrohrstück umfasst. Mittels der Schelle ist eine besonders einfache und dauerhafte Kopplung des Schutzrohrsystems mit der Fluidleitung möglich. Das Hausanschlussrohrstück ermöglicht analog zur Schelle einen einfachen Anschluss des Schutzrohrsystems bzw. der Fluidleitung an einen Hausanschluss.

In einer weiteren bevorzugten Ausführung der Erfindung ist vorgesehen, dass die Fluidleitungskomponente eine bei Bedarf die Fluidleitung öffnende Schneidvorrichtung umfasst. Mittels der Schneidvorrichtung kann eine Fluidverbindung zwischen der Fluidleitung und beispielsweise einem mit dem Schutzrohrsystem gekoppelten Hausanschluss hergestellt werden, wobei die Schneidvorrichtung über den Rohrabschnitt von der Oberfläche aus bedient werden kann. Die Schneidvorrichtung ist dazu eingerichtet, eine Öffnung in die Fluidleitung zu schneiden. Die Fluidleitung muss zum Anschließen der Fluidleitung nicht umständlich freigelegt werden. Die Verbindung zwischen der Fluidleitung und beispielsweise einem Hausanschluss kann daher im vollständig eingebauten Zustand des Schutzrohrsystems erfolgen.

In einer weiteren bevorzugten Ausführung der Erfindung ist vorgesehen, dass der Rohrabschnitt einen Endabschnitt umfasst, der einen geringeren Durchmesser aufweist, als davon unterschiedliche Abschnitte des Rohrabschnitts und/oder dessen Mittelachse versetzt zur Mittelachse davon unterschiedlicher Abschnitte des Rohrabschnitts angeordnet ist. Der Endabschnitt des Rohrabschnitts kann sich mit dem unteren Rohrende überschneiden bzw. identisch dazu sein. Da im Bereich der Fluidleitung weitere Leitungen oder sonstige Einrichtungen vorhanden sein können, kann der zur Verfügung stehende Bauraum für das Schutzrohrsystem in diesem Bereich begrenzt sein. Durch einen möglichst geringen Durchmesser des Rohrabschnitts im Bereich der Fluidleitung bzw. in dessen entsprechenden Endabschnitt kann einfach sichergestellt werden, dass das Schutzrohrsystem nicht mit anderen Einrichtungen kollidiert. Hierdurch wird der Einbau des Schutzrohrsystems weiter vereinfacht.

In einer weiteren bevorzugten Ausführung der Erfindung ist vorgesehen, dass die Elektro- und/oder Fluidleitungskomponente wenigstens teilweise innerhalb des Endabschnittes angeordnet ist. Denkbar ist auch, dass die Elektro- und/oder Fluidleitungskomponente komplett innerhalb des Endabschnittes angeordnet ist.

In einer weiteren bevorzugten Ausführung der Erfindung ist vorgesehen, dass der Außendurchmesser des Rohrabschnitts kleiner als oder gleich groß wie der Außendurchmesser der Fluidleitung ist. Damit wird für das Schutzrohrsystem ausschließlich der Bauraum oberhalb der Fluidleitung genutzt und es kann so besser vermieden werden, dass es zu Kollisionen zwischen dem Schutzrohrsystem und anderen Einrichtungen kommt, die in der Nähe der Fluidleitung angeordnet sind.

Die Erfindung ist ferner auf eine Elektro- und/oder Fluidleitungskomponente gerichtet, die dafür vorgesehen ist, an oder in eine Fluidleitung an- oder eingebaut zu sein, wobei die Elektro- und/oder Fluidleitungskomponente auf ihrer in Gebrauchsstellung oberen Seite einen Fußrohrabschnitt aufweist, der insbesondere dafür vorgesehen ist, mit dem Rohrabschnitt des Schutzrohrsystems nach einem der Ansprüche 1 bis 15 dicht zusammenzuwirken.

Weitere Einzelheiten und Vorteile der Erfindung sind anhand der in den Figuren gezeigten Ausführungsbeispiele erläutert. Dabei zeigen:
- Fig. 1:: erstes Ausführungsbeispiel des Schutzrohrsystems in einem teilweise montierten Zustand;
- Fig. 2:: erstes Ausführungsbeispiel des Schutzrohrsystems in einem fertigmontierten Zustand;
- Fig. 3, 4:: zwei Ansichten eines zweiten Ausführungsbeispiels des Schutzrohrsystems im fertigmontierten Zustand;
- Fig. 5, 6:: zwei Ansichten eines dritten Ausführungsbeispiels des Schutzrohrsystems im fertig montierten Zustand; und
- Fig. 7, 8:: zwei Ansichten eines vierten Ausführungsbeispiels des Schutzrohrsystems im fertig montierten Zustand.

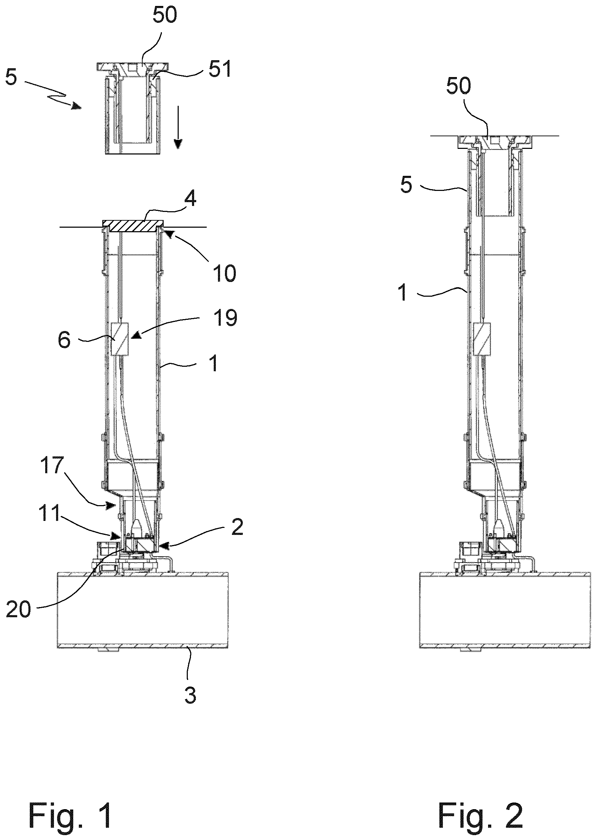

Figur 1 zeigt ein Schutzrohrsystem in einer seitlichen Schnittansicht und in einem teilweise montierten Zustand, in welchem die Abdeckung über der Fluidleitung 3 noch unvollständig ist. Als Abdeckung kann hier beispielsweise Erdreich und/oder ein Straßenbelag verstanden werden, unter denen die Fluidleitung 3 verlegt ist. Bei der Fluidleitung 3 kann es sich um eine Wasserleitung, eine Abwasserleitung oder um eine sonstige unterirdisch verlegte Fluidleitung handeln.

Das Schutzrohrsystem umfasst einen Rohrabschnitt 1 mit einem in Einbaulage oberen und unteren Rohrende 10, 11. Der Außendurchmesser des Rohrabschnitts 1 kann kleiner als oder gleich groß sein wie der Außendurchmesser der Fluidleitung 3.

Wenigstens eine Elektro- und Fluidleitungskomponente 2 des Schutzrohrsystems ist an einer unterirdisch verlaufenden Fluidleitung 3 angeschlossen. Das untere Ende 11 des Rohrabschnitts 1 ist flüssigkeitsdicht mit der Elektro- und Fluidleitungskomponente 2 verbunden ist. Die Elektro- und Fluidleitungskomponente 2 kann wenigstens teilweise innerhalb des unteren Endes des Rohrabschnitts 1 angeordnet sein. Die Elektro- und Fluidleitungskomponente 2 weist einen mit dem unteren 11 Ende des Rohrabschnitts 1 zusammenwirkenden Abdichtrand 20 auf. Der Begriff der Elektro- und Fluidleitungskomponente 2 ist vorliegend breit zu verstehen und kann auch eine Kombination unterschiedlicher Komponenten wie einen Vierkantschoner zur Betätigung eines Ventils bzw. Schiebers, eine wasserdichte Multifunktionsdichtung, ein Sattelstück, ein Außengehäuseteil und/oder eine Absperrarmatur umfassen.

Im oberen Bereich des Rohrabschnitts 1 ist ein Planumdeckel 4 gezeigt, welcher in dem in Figur 1 gezeigten teilweise montierten Zustand des Schutzrohrsystems einen temporären Abschluss des Schutzrohrsystems nach oben hin bildet und den Innenraum des Schutzrohrsystems gegen Außeneinflüsse schützt. Der Planumdeckel 4 kann als provisorischer Bauverschluss funktionieren. Der Planumdeckel 4 kann im Wesentlichen ebenerdig zu einer unteren Schicht beispielsweise eines Straßenbelags angeordnet sein, welche in Figur 1 durch eine horizontale Linie angedeutet ist und auf welche zu einem späteren Zeitpunkt eine weitere Schicht aufgetragen werden soll.

Wird eine weitere Schicht aufgetragen, wie dies in Figur 2 gezeigt wird, so wird der Rohrabschnitt 1 mittels eines Kopfrohrabschnitts 5 verlängert.

Der Rohrabschnitt 1 und der Kopfrohrabschnitt 5 können ein Schutzrohr für die darin enthaltenen Komponenten bilden. Der Kopfrohrabschnitt 5 ist relativ zum Rohrabschnitt 1 teleskopierbar, wodurch das Schutzrohrsystem insgesamt an unterschiedlich tief im Boden angeordnete Fluidleitungen 3 anpassbar ist. Der Rohrabschnitt 1 und der Kopfrohrabschnitt 5 können als Rohr-in-Rohr-System ausgebildet sein, welches insbesondere stufenlos höhenverstellbar und/oder feststellbar ist. Zum Verbinden des Rohrabschnitts 1 mit dem Kopfrohrabschnitts 5 kann eine insbesondere höhenverstellbare bzw. ausziehbare Muffe vorgesehen sein.

Am oberen Ende des Kopfrohrabschnitts 5 wird eine das Schutzrohrsystem verschließende Straßenkappe 50 angeordnet, die insbesondere teilweise innerhalb des Kopfrohrabschnitts 5 aufnehmbar ist. Die Straßenkappe 50 kann höhenverstellbar zum Rohrabschnitt 1 bzw. zum Kopfrohrabschnitt 5 ausgebildet sein. Zusätzlich zur Straßenkappe 5 kann ein wasserdichter Innendeckel vorgesehen sein, mittels dem der Innenraum des Schutzrohrsystems ebenfalls verschließbar ist. Der Innendeckel kann unterhalb der Straßen kappe 5 angeordnet sein.

Um den Innenraum des Schutzrohrsystems gegen das Eindringen von Wasser und sonstiger Substanzen zu schützen, kann zwischen dem Kopfrohrabschnitt 5 und der Straßenkappe 50 eine Dichtung 51 vorgesehen sein. Diese Dichtung 51 kann sich im Wesentlichen in radialer Richtung erstrecken. Die Dichtung 51 kann einen inneren Abschnitt umfassen, der sich radial weniger weit nach außen erstreckt als ein äußerer Abschnitt, wobei beide Abschnitte voneinander axial beabstandet sein können. Der äußere Abschnitt kann oberhalb des inneren Abschnitts angeordnet sein. Die Dichtung kann einen im Wesentlichen T-förmigen Längsschnitt aufweisen.

Der Rohrabschnitt 1 und/oder der Kopfrohrabschnitt 5 weisen ein Aufnahmegehäuse 6 für elektrische und/oder elektronische Schaltungsteile 7 auf, die mit einer Elektrokomponente 2 in Wirkverbindung stehen. Das Aufnahmegehäuse 6 kann beispielsweise frei an einem Kabel hängend innerhalb des Schutzrohrsystems angeordnet sein.

Der Rohrabschnitt 1 kann ferner einen Endabschnitt 17 umfassen, der einen geringeren Durchmesser aufweist, als davon unterschiedliche Abschnitte des Rohrabschnitts 1 und/oder dessen Mittelachse versetzt zur Mittelachse davon unterschiedlicher Abschnitte des Rohrabschnitts 1 angeordnet ist. Der Rohrabschnitt und der Kopfrohrabschnitt können wenigstens teilweise hohlzylinderförmig ausgebildet sein. Die Elektro- und/oder Fluidleitungskomponente 2 kann wenigstens teilweise innerhalb dieses Endabschnittes 17 angeordnet sein. Im Bereich der Elektro- und Fluidleitungskomponente 2 und/oder innerhalb des Schutzrohrsystems kann ein wasserabweisendes Medium vorgesehen sein, welches die Elektro- und Fluidleitungskomponente 2 vor gegebenenfalls in das Schutzrohrsystem eingedrungener Flüssigkeit schützt. Bei dem Medium kann es sich um ein Gel, um ein synthetisches oder natürliches Fett oder Öl, ein Wachs oder eine sonstige insbesondere hydrophobe Substanz handeln, welche dazu geeignet ist, die Elektro- und Fluidleitungskomponente 2 vor eindringendem Wasser dauerhaft zu schützen.

Der Endabschnitt 17 kann als Schutzmantel-Adapter ausgebildet sein oder mit einem solchen gekoppelt sein. Der Schutzmantel-Adapter schützt zum einen die darin befindlichen Einrichtungen und ermöglicht zum anderen das Anschließen des Schutzrohrsystems an gegebenenfalls unterschiedliche Fluidleitungen 3. Alternativ oder zusätzlich kann ein Adapterstück vorgesehen sein, mittels dem das Schutzrohrsystem an unterschiedliche Fluidleitungen 3, gegebenenfalls auch größerer Durchmesser, anschließbar ist.

Figur 2 zeigt das Schutzrohrsystem in einem fertigmontierten Zustand, bei dem der Kopfrohrabschnitt 5 mit dem Rohrabschnitt 1 verbunden ist und das Innere des Schutzrohrsystems mit der Straßenkappe 50 verschlossen ist. Der Planumdeckel 4, welcher als temporärer Verschluss in Figur 1 gezeigt ist, wurde durch die in Figur 2 gezeigte Straßenkappe 50 ersetzt. Das Schutzrohrsystem ist nunmehr auf eine dauerhaft konstante Tiefe der Fluidleitung 3 eingestellt. Gegenüber der in Figur 1 gezeigten Situation wurde eine weitere Schicht, beispielsweise ein Straßenbelag, auf die Fluidleitung 3 aufgetragen und damit die Einbautiefe der Fluidleitung 3 vergrößert. Das Schutzrohrsystem wurde durch Koppeln des Kopfrohrabschnitts 5 mit dem Rohrabschnitt 1 entsprechend verlängert.

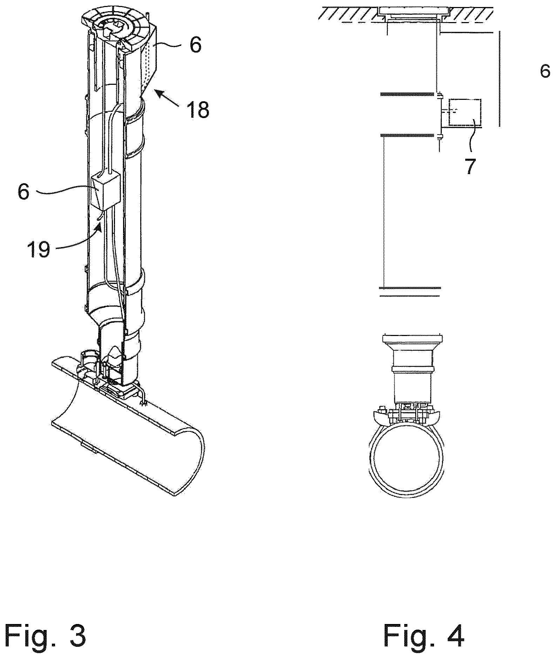

Figur 3 zeigt ein zweites Ausführungsbeispiel des Schutzrohrsystems, bei dem Aufnahmegehäuse 6 auf der Innen- 19 und Außenseite 18 des Rohrabschnitts 1 bzw. des Kopfrohrabschnitts 5 angeordnet sind. Abweichend von der in Figur 3 gezeigten Konfiguration ist es auch denkbar, dass eine Mehrzahl von Aufnahmegehäusen 6 auf der Innen- 19 und Außenseite 18 nur des Rohrabschnitts 1 oder nur des Kopfrohrabschnitts 5 angeordnet sind. Das Aufnahmegehäuse 6 bzw. die Aufnahmegehäuse 6 können mit dem Inneren bzw. mit der Innenseite 19 des Rohrabschnitts 1 und/oder des Kopfrohrabschnitts 5 in Verbindung steht, wobei die Verbindung beispielsweise als elektronische Leitung ausgebildet sein kann.

Figur 4 zeigt, dass die elektronischen Schaltungsteile 7 innerhalb der Aufnahmegehäuse 6 und gegebenenfalls auch außerhalb des Rohrabschnitts 1 bzw. des Kopfrohrabschnitts 5 angeordnet sein können.

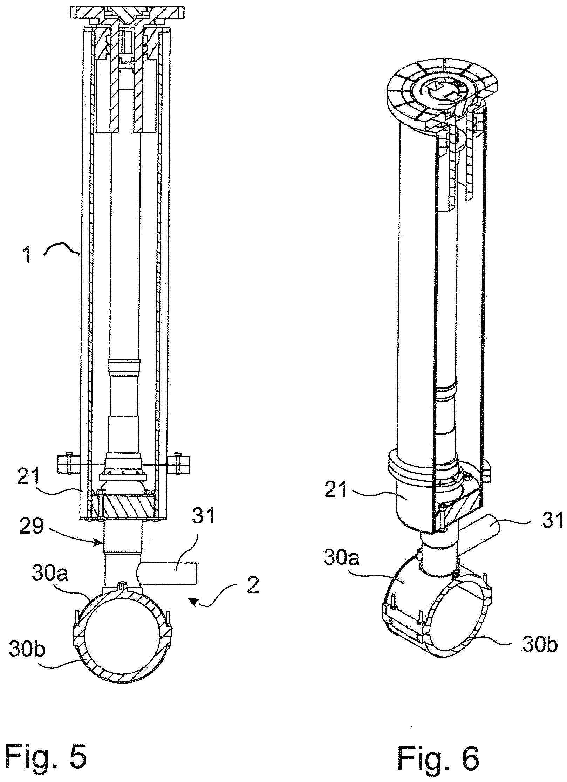

Figuren 5 bis 8 zeigen unterschiedliche Ausführungsbeispiele, bei denen die Fluidleitkomponente 2 eine Absperrarmatur, ein Ventil, ein Steigrohr, und/oder ein Sattelstück bzw. beliebige Kombinationen der genannten Komponenten umfassen kann.

In dem in den Figuren 5 und 6 gezeigten dritten Ausführungsbeispiel des Schutzrohrsystems ist ein Fußrohrabschnitt 21 vorgesehen, welcher mit dem Rohrabschnitt 1 dicht zusammenwirkt. Der in Figur 1 gezeigte Endabschnitt 17 kann Teil des Fußrohrabschnittes 21 sein oder umgekehrt. Denkbar ist auch, dass der Fußrohrabschnitt 21 genau dem Endabschnitt 17 entspricht und/oder einstückig mit diesem gefertigt ist. Der Fußrohrabschnitt 21 kann über einen Flanschabschnitt mit dem Rohrabschnitt 1 flüssigkeitsdicht gekoppelt sein.

Gemäß dem dritten Ausführungsbeispiel umfasst die Fluidleitungskomponente 2 eine die Fluidleitung 3 umgreifende Schelle 30a, 30b und/oder ein Hausanschlussrohrstück 31. Die Schelle 30a, 30b koppelt das Schutzrohrsystem mit der Fluidleitung 3, wie dies in Figur 4 angedeutet ist. Die Schelle 30a, 30b kann aus einem oberen Schellenteil 30a und einem unteren Schellenteil 30b bestehen. Die Schelle 30a, 30b kann auf unterschiedliche Durchmesser der Fluidleitung 3 einstellbar sein.

Wie Figur 5 ferner zu entnehmen ist, kann die Fluidleitungskomponente 2 eine bei Bedarf die Fluidleitung 3 öffnende Schneidvorrichtung 29 umfassen. Die Schneidvorrichtung 29 kann insbesondere manuell über das oberer Rohrende 10 bzw. über den geöffneten Kopfrohrabschnitt 5 angetrieben werden und so eine Öffnung in die Fluidleitung 3 schneiden. Durch die Öffnung in der Fluidleitung 3 kann eine fluidische Verbindung zwischen der Fluidleitung 3, dem Hausanschlussrohrstück 31 und einem in den Figuren nicht gezeigten Hausanschluss hergestellt werden. Dies kann auch erhebliche Zeit nach Fertigmontage des Schutzrohrsystems und nahezu unbeeinflusst von Umwelteinflüssen geschehen, die ansonsten die Funktionsweise der Scheidvorrichtung 29 und der gesamten Fluidleitkomponente 2 beeinflussen könnten.

Figur 6 zeigt eine perspektivische Ansicht der in Figur 5 gezeigten Ausführungsform. Hierbei ist zu erkennen, dass das Hausanschlussrohrstück 31 insbesondere im rechten Winkel zur Fluidleitung 3 bzw. zur Schelle 30a,30b angeordnet sein kann.

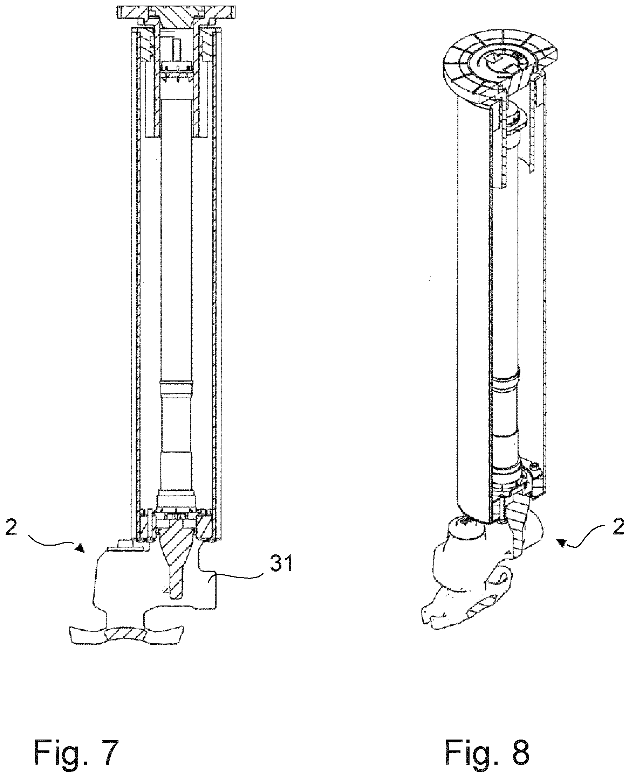

Figuren 7 und 8 zeigen unterschiedliche Ansichten eines vierten Ausführungsbeispiels, bei dem die Fluidleitungskomponente 2 ein Sattelstück umfasst, über welches das Schutzrohrsystem mit der Fluidleitung 3 koppelbar ist. Die Merkmale der beschriebenen Ausführungsbeispiele sind selbstverständlich miteinander kombinierbar.

## Patentansprüche

1. Schutzrohrsystem, umfassend einen Rohrabschnitt (1) mit einem in Einbaulage oberen und unteren Rohrende (10, 11) und wenigstens eine Elektro- und Fluidleitungskomponente (2) welche an einer unterirdisch verlaufenden Fluidleitung (3) anschließbar ist,
▪ wobei das untere Ende des Rohrabschnitts (1) flüssigkeitsdicht mit der Elektro- und Fluidleitungskomponente (2) verbunden ist,
▪ wobei die Elektro- und Fluidleitungskomponente (2) einen mit dem unteren Ende des Rohrabschnitts (1) zusammenwirkenden Abdichtrand (20) aufweist,
▪ wobei das obere Rohrende (10) des Rohrabschnitts (1) einen teleskopierbaren Kopfrohrabschnitt (5) aufnimmt,
**dadurch gekennzeichnet,**
▪ dass der Kopfrohrabschnitt (5) an seinem oberen Ende eine das Schutzrohrsystem verschließende Straßenkappe (50) aufnimmt, und
▪ dass der Rohrabschnitt (1) und/oder der Kopfrohrabschnitt (5) ein Aufnahmegehäuse (6) für elektrische und/oder elektronische Schaltungsteile (7) aufweist, die mit der Elektrokomponente (2) in Wirkverbindung stehen.

2. Schutzrohrsystem nach Anspruch 1, **dadurch gekennzeichnet, dass** die Elektro- und Fluidleitungskomponente (2) einen Fußrohrabschnitt (21) aufweist, der mit dem Rohrabschnitt (1) dicht zusammenwirkt.

3. Schutzrohrsystem nach Anspruch 1 oder 2, **dadurch gekennzeichnet, dass** zwischen dem Kopfrohrabschnitt (5) und der Straßenkappe (50), in radialer Richtung eine Dichtung (51) vorgesehen ist.

4. Schutzrohrsystem nach einem der Ansprüche 1 bis 3, **dadurch gekennzeichnet, dass** das Aufnahmegehäuse (6) auf der Innen- (19) oder Außenseite (18) des Rohrabschnitts (1) oder des Kopfrohrabschnitts (5) angeordnet ist und mit dem Inneren (19) des Rohrabschnitts (1) und/oder des Kopfrohrabschnitts (5) in Verbindung steht.

5. Schutzrohrsystem nach einem der vorhergehenden Ansprüche, **dadurch gekennzeichnet, dass** die Fluidleitungskomponente (2) eine Absperrarmatur, ein Ventil, ein Steigrohr, und/oder ein Sattelstück umfasst.

6. Schutzrohrsystem nach einem der vorhergehenden Ansprüche, **dadurch gekennzeichnet, dass** die Fluidleitungskomponente (2) eine die Fluidleitung (3) umgreifende Schelle (30a, 30b) und/oder ein Hausanschlussrohrstück (31) umfasst.

7. Schutzrohrsystem nach einem der vorhergehenden Ansprüche, **dadurch gekennzeichnet, dass** die Fluidleitungskomponente (2) eine bei Bedarf die Fluidleitung (3) öffnende Schneidvorrichtung (29) umfasst.

8. Schutzrohrsystem nach einem der vorhergehenden Ansprüche, **dadurch gekennzeichnet, dass** der Rohrabschnitt (1) einen Endabschnitt (17) umfasst, der einen geringeren Durchmesser aufweist, als davon unterschiedliche Abschnitte des Rohrabschnitts (1) und/oder dessen Mittelachse versetzt zur Mittelachse davon unterschiedlicher Abschnitte des Rohrabschnitts (1) angeordnet ist.

9. Schutzrohrsystem nach Anspruch 8, **dadurch gekennzeichnet, dass** die Elektro- und Fluidleitungskomponente (2) wenigstens teilweise innerhalb des Endabschnittes (17) angeordnet ist.

## Claims

1. Protective tube system, comprising a tubular portion (1) having an upper and a lower tube end (10, 11) in the installed position, and at least one electrical and fluid line component (2) which is connectable to a subterranean fluid line (3);
- wherein the lower end of the tubular portion (1) is connected in a fluid-tight manner to the electrical and fluid line component (2);
- wherein the electrical and fluid line component (2) has a sealing periphery (20) which interacts with the lower end of the tubular portion (1);
- wherein the upper tubular end (10) of the tubular portion (1) receives a telescopic head tube portion (5),
**characterized in that**
- the head tube portion (5) on its upper end receives a street cap (50) that closes the protective tube system; and
- the tubular portion (1) and/or the head tube portion (5) have/has a receptacle housing (6) for electrical and/or electronic switching parts (7) which are operatively connected to the electrical component (2).

2. Protective tube system according to Claim 1, **characterized in that** the electrical and fluid line component (2) has a bottom tube portion (21) which tightly interacts with the tubular portion (1).

3. Protective tube system according to Claim 1 or 2, **characterized in that** a seal (51) is provided in the radial direction between the head tube portion (5) and the street cap (50).

4. Protective tube system according to one of Claims 1 to 3, **characterized in that** the receptacle housing (6) is disposed on the internal (19) or the external side (18) of the tubular portion (1) or of the head tube portion (5) and is connected to the interior (19) of the tubular portion (1) and/or of the head tube portion (5).

5. Protective tube system according to one of the preceding claims, **characterized in that** the fluid line component (2) comprises a shut-off fitting, a valve, a riser, and/or a saddle.

6. Protective tube system according to one of the preceding claims, **characterized in that** the fluid line component (2) comprises a clamp (30a, 30b) which encompasses the fluid line (3), and/or a domestic connection tube piece (31).

7. Protective tube system according to one of the preceding claims, **characterized in that** the fluid line component (2) comprises a cutting device (29) which opens the fluid line (3) if required.

8. Protective tube system according to one of the preceding claims, **characterized in that** the tubular portion (1) comprises an end portion (17) which has a smaller diameter than portions of the tubular portion (1) that differ therefrom, and/or the central axis of said end portion (17) is disposed so as to be offset from the central axis of portions of the tubular portion (1) that differ therefrom.

9. Protective tube system according to Claim 8, **characterized in that** the electrical and fluid line component (2) is at least partially disposed within the end portion (17).

## Revendications

1. Système de tube de protection, comprenant une portion de tube (1) ayant une extrémité de tube haute et une basse (10, 11) en position montée et au moins un composant formant conduite d'électricité et de fluide (2), lequel peut être raccordé à une conduite de fluide (3) qui suit un tracé souterrain,
* l'extrémité basse de la portion de tube (1) étant reliée de manière étanche aux fluides au composant formant conduite d'électricité et de fluide (2),
* le composant formant conduite d'électricité et de fluide (2) possédant un bord d'étanchéification (20) qui coopère avec l'extrémité basse de la portion de tube (1), * l'extrémité de tube haute (10) de la portion de tube (1) accueillant une portion de tube de tête (5) télescopique,
caractérisé en ce
* que la portion de tube de tête (5) accueille au niveau de son extrémité haute un regard de chaussée (50) qui ferme le système de tube de protection, et
* que la portion de tube (1) et/ou la portion de tube de tête (5) possède un boîtier de logement (6) pour des pièces de commutation (7) électriques et/ou électroniques, qui sont en liaison fonctionnelle avec le composant électrique (2).

2. Système de tube de protection selon la revendication 1, **caractérisé en ce que** le composant formant conduite d'électricité et de fluide (2) possède une portion de tube de pied (21) qui coopère de manière étanche avec la portion de tube (1).

3. Système de tube de protection selon la revendication 1 ou 2, **caractérisé en ce qu'**une garniture d'étanchéité (51) est présente dans la direction radiale entre la portion de tube de tête (5) et le regard de chaussée (50).

4. Système de tube de protection selon l'une des revendications 1 à 3, **caractérisé en ce que** le boîtier de logement (6) est disposé sur le côté intérieur (19) ou extérieur (18) de la portion de tube (1) ou de la portion de tube de tête (5) et se trouve en liaison avec l'intérieur (19) de la portion de tube (1) et/ou de la portion de tube de tête (5).

5. Système de tube de protection selon l'une des revendications précédentes, **caractérisé en ce que** le composant formant conduite de fluide (2) comporte un élément de robinetterie d'arrêt, une vanne, un tube ascendant et/ou une pièce de piquage.

6. Système de tube de protection selon l'une des revendications précédentes, **caractérisé en ce que** le composant formant conduite de fluide (2) comporte un collier (30a, 30b) qui entoure la conduite de fluide (3) et/ou une pièce de tube de raccordement d'immeuble (31).

7. Système de tube de protection selon l'une des revendications précédentes, **caractérisé en ce que** le composant formant conduite de fluide (2) comporte un dispositif de coupure (29) qui ouvre la conduite de fluide (3) en cas de besoin.

8. Système de tube de protection selon l'une des revendications précédentes, **caractérisé en ce que** la portion de tube (1) comporte une portion d'extrémité (17), qui présente un diamètre plus petit que des portions différentes de celle-ci de la portion de tube (1) et/ou dont l'axe central est disposé décalé par rapport à l'axe central des portions différentes de celle-ci de la portion de tube (1).

9. Système de tube de protection selon la revendication 8, **caractérisé en ce que** le composant formant conduite d'électricité et de fluide (2) est disposé au moins partiellement à l'intérieur de la portion d'extrémité (17).
